# EUROPÄISCHE PATENTSCHRIFT

(11) **EP 1 593 310 B1**
(45) Veröffentlichungstag und Bekanntmachung des Hinweises auf die Patenterteilung: **10.12.2008**
(21) Anmeldenummer: 04405293.4
(22) Anmeldetag: 07.05.2004
(51) Int. Cl.: A23G 3/00, A23G 3/20, A23G 3/02

(54) **Verfahren und Vorrichtung zum automatischen Einlegen von Lebensmittelstücken in ein Aufnahmeteil**
Process and device for putting automatically pieces of food into a receptacle
Procédé et dispositif pour mettre automatiquement de pièces de nourriture dans un récipient

(43) Veröffentlichungstag der Anmeldung: 09.11.2005
(73) Patentinhaber: Chocoladefabriken Lindt & Sprüngli (Schweiz) AG, 8802 Kilchberg (CH)
(72) Erfinder: Levent, Bilgi, 8212 Neuhausen (CH)
(74) Vertreter: Rentsch & Partner

(56) Entgegenhaltungen:
- DE-A- 4 220 648
- DE-A- 19 817 613
- US-A- 4 760 778
- PATENT ABSTRACTS OF JAPAN Bd. 2003, Nr. 12, 5. Dezember 2003 (2003-12-05) & JP 2003 235531 A (OSA KIKAI KK), 26. August 2003 (2003-08-26)

## Beschreibung

Die vorliegende Erfindung betrifft ein Verfahren und eine Vorrichtung zum automatischen Einlegen von einzelnen Lebensmittelstücken, wie Samenkerne, Früchte oder Teile davon, in ein Aufnahmeteil, beispielsweise in ein Werkzeug, in eine Verpackung oder in ein schalenförmiges Lebensmittelteil, nach dem Oberbegriff des Patentanspruchs 1 bzw. 5.

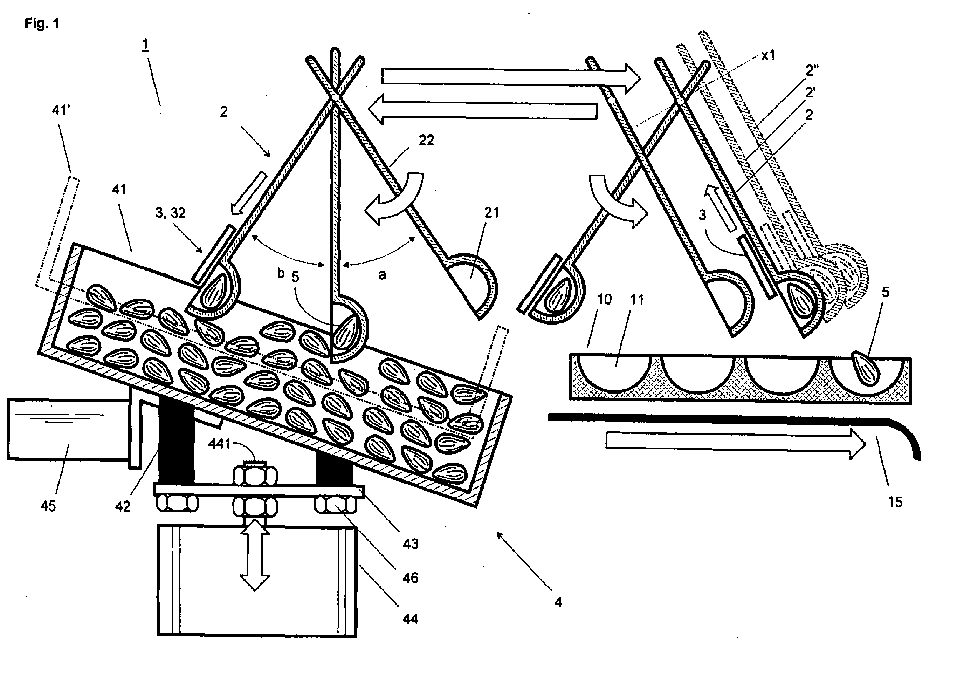

Lebensmittelprodukte wie Tafelschokoladen, Konfekt, insbesondere Pralinen, und weitere Süsswaren enthalten oft Nüsse oder Früchte. Beispielsweise in [1], WO 98/41105 ist ein Lebensmittelprodukt mit zwei zueinander komplementären Schalen beschrieben, die eine einzelne Nuss einschliessen. Wie in [1], Figuren 1 bis 6 gezeigt, wird die Nuss in die untere Schale eingelegt, wonach diese gefüllt und anschliessend durch die zweite Schale abgedeckt wird.

Möglich ist ferner, das Lebensmittelstück in eine Werkzeugform oder eine Verpackungsform einzulegen, die anschliessend mit einem Material, beispielsweise Schokolade gefüllt wird.

Wesentlich bei der Produktion der Lebensmittelprodukte ist, dass diese stets mit einem Lebensmittelstück versehen werden, wobei dieses beim Erfassen und Ablegen nicht beschädigt werden soll. Beschädigung der Lebensmittelstücke können normalerweise vermieden werden, wenn anstelle von Greifelementen Saugelemente verwendet werden. Bei der Verwendung von Saugelementen besteht jedoch eine hohe Wahrscheinlichkeit, dass Lebensmittelstücke während einzelnen Arbeitsgängen nicht korrekt erfasst werden und Lebensmittelprodukte resultieren, die nicht mit einem Lebensmittelstück bestückt sind. Sofern mechanische Greifer, beispielsweise Zangen verwendet werden, besteht die Gefahr, dass die Lebensmittelstücke beschädigt, fallen gelassen oder gar nicht erfasst werden.

Eine mit Saugern versehene Bestückungsvorrichtung ist beispielsweise aus [2], DE 42 20 648 A1 bekannt. Bei dieser Vorrichtung werden die vorgewärmten Lebensmittelstücke (Samenkerne) mittels eines Linearvibrationsförderers zuerst vereinzelt und über Förderrinnen, die der Förderung und der Ausrichtung der Samenkerne dienen, gegen einen Anschlag geführt, wo sie von den Saugern abgenommen werden, die der Form der Samenkerne angepasst sind. Zu bestückende Lebensmittelteile, abgekühlte Pralinen, werden auf einem Förderband in Linien ausgerichtet und dann über eine Wippvereinzelung positioniert. Dort werden die Pralinen mittels der Sauger mit den aufgeheizten Samenkernen bestückt. Die auf der Pralinenoberfläche liegenden Samenkerne sinken in die aufschmelzende Schokolade ein und bilden nach deren Abkühlung eine feste Verbindung mit der Praline.

Nachteilig bei dem in [2] beschriebenen Verfahren und der Vorrichtung ist insbesondere die Verwendung von zwei Arbeitsstufen, eine erste Stufe zum Vereinzeln und Ausrichten der Lebensmittelstücke und eine zweite Arbeitsstufe zum Erfassen und Ablegen der Lebensmittelstücke. Wie erwähnt, ist der Sauger an die Lebensmittelstücke anzupassen, damit dieselben sicher erfasst werden können. Da die Lebensmittelstücke Naturprodukte sind, ist die erforderliche Anpassung jedoch kaum in jedem Fall gewährleistet. Durch das Ansaugen erfolgt zudem eine Abkühlung der Lebensmittelstücke.

Aus der DE-A-19817613 ist eine Vorrichtung zum Einlegen und/oder Nachlegen von Einlegegut mit unterschiedlicher Beschaffenheit bekannt, bei der eine Ausblasvorrichtung und eine Führungsvorrichtung als Teilkomponenten im Wesentlichen in der horizontalen Mittellage einer Aufnahmetrommel so angeordnet sind, dass das Einlegegut durch die Ausblasvorrichtung in die Führungsvorrichtung ausblasbar ist. Ein von der Ausblasvorrichtung erzeugter Luftstrom ermöglicht den schonenden Transport des empfindlichen Einlegegutes unterschiedlicher Beschaffenheit aus den Ausnahmemitteln der Aufnahmetrommel in die Führungsvorrichtung. Die Ausblasvorrichtung und die Führungsvorrichtung sind in der horizontalen Mittellage der Aufnahmetrommel angeordnet, so dass keine Verschlussteile an der Innenseite im Scheitelbereich der Trommel nötig sind, die ein Herausfallen des Einlegegutes aus den Aufnahmemitteln aufgrund der Schwerkraft verhindern.

Durch die rotierende Aufnahmetrommel mit Aufnahmemitteln an ihrer Innenseite wird das Einlegegut in die Aufnahmemittel bedingt durch die Rotation der Aufnahmetrommel aufgenommen. Die Aufnahmemittel weisen dazu eine dem Innenraum der Aufnahmetrommel zugewandte Einfüllbohrung auf. Eine der Aussenfläche zugewandte Ausblasbohrung ist üblicherweise ausserhalb des Ausblasbereiches von einem Mantel umgeben, der ein unerwünschtes Herausfallen des Einlegegutes über die Ausblasbohrung verhindert.

Die Ausblasvorrichtung und die anschliessende Führungsvorrichtung sind in einer Ebene mit der horizontalen Aufnahmetrommelmittellage angeordnet, so dass das Einlegegut annähernd waagerecht durch über die Einfüllbohrung eingeblasene Druckluft aus der Ausblasbohrung in eine Führungsvorrichtung mit einem Führungskanal mit mindestens zwei getrennt verschliessbaren Auswurföffnungen geblasen wird, über die es schliesslich in eine Artikelkavität ausgeblasen wird.

Durch die Verwendung von Druckluft wird der apparative Aufwand erhöht und die Steuerung der Anlage schwieriger. Ein weiterer Nachteil der Vorrichtung gemäss der DE-A-19817613 besteht darin, dass bei einem Wechsel des zu bestückenden Produktes mit einer unterschiedlichen Anordnung der Artikelkavitäten die gesamte Führungsvorrichtung ausgewechselt werden muss. Durch die Verwendung der Aufnahmetrommel benötigt die Anlage zudem sehr viel Platz nicht nur in der Breite, sondern auch in der Höhe. Gerade bei Produktionsstandorten mit beengten Produktionsverhältnissen steht dieser oft nicht zur Verfügung.

In der US-4,760,778 ist ein Gerät zum Ablagern von Erdnüssen, auf einer Außenfläche eines kontinuierlich vorrückenden Stranges aus essbarem Material beschreiben, wie es zum Beispiel bei der Herstellung von Karamell-haltigen mit Schokolade überzogenen Riegeln zum Einsatz kommt. Das Gerät fördert die Erdnüsse mittels einem hohlen drehbaren Zylinder aus einem Vorratsbehälter um annähernd 270° auf die strangförmige Masse. Beim Fördern mit dem Drehzylinder werden die Erdnüsse unterdruckbeaufschlagt über Luftkanälen in einer Nut am Drehzylinder gehalten sind. Die Nut des Drehzylinders ist an die Querschnittform des mit Erdnüssen zu versehenden Stranges angepasst. Der gesamte Innenraum des sich kontinuierlich drehenden Zylinder muss abgedichtet werden, um ein zum Ansaugen und Fördern der Erdnüsse ausreichenden Unterdruck aufrecht zu erhalten. Das Anlegen des Unterdruckes an das rotierende Bauteil gestaltet sich erwartungsgemäss schwierig. Zudem ist zur Abgabe der Erdnüsse das Anlegen eines Überdruckes nötig. Die Vorrichtung und die Steuerung der Vorrichtung werden dadurch wiederum sehr aufwändig und damit Teuer. Die Vorrichtung inklusive des Vorratsbehälters lässt sich nur über dem Strang aus essbarem Material anordnen und ist wiederum sehr platzintensiv. Ein automatisches Einlegen von einzelnen Lebensmittelstücken in jeweils ein diskretes Aufnahmeteil ist mit der Vorrichtung US-4,760,778 nicht vorgesehen und auch nicht möglich. Beide vorgenannten Vorrichtungen führen wiederum durch das Saugen und/oder Blasen zum Abkühlen der geförderten Lebensmittelstücke.

Der vorliegenden Erfindung liegt daher die Aufgabe zugrunde, ein verbessertes Verfahren und eine verbesserte Vorrichtung zu schaffen, die dem automatischen Einlegen von Lebensmittelstücken in ein Aufnahmeteil dienen.

Insbesondere sind ein Verfahren und eine einfach ausgestaltete Vorrichtung anzugeben, die es erlauben, einzelne Lebensmittelstücke rasch und sicher zu erfassen und präzise abzulegen, ohne dass diese vorvereinzelt wurden und ohne dass diese während des Erfassens beschädigt werden.

Diese Aufgabe wird mit einem Verfahren und einer Vorrichtung gelöst, welche die in Anspruch 1 bzw. 5 angegebenen Merkmale aufweisen. Vorteilhafte Ausgestaltungen der Erfindung sind in weiteren Ansprüchen angegeben.

Das Verfahren und die Vorrichtung dienen dem automatischen Einlegen von einzelnen in einem Behälter gespeicherten Lebensmittelstücken, wie Samenkerne, Früchte oder Teile davon, in ein Aufnahmeteil, insbesondere in ein Werkzeug, in eine Verpackung oder in ein Lebensmittelteil, wobei die Lebensmittelstücke mittels wenigstens eines Aufnahmewerkzeugs in einem Aufnahmebereich einzeln erfasst, in den Abgabebereich transportiert und dort in das Aufnahmeteil eingelegt werden.

Erfindungsgemäss wird in einem ersten Schritt das verschiebbar gelagerte Aufnahmewerkzeug, das einen drehbar gehaltenen Hebel mit einem der Aufnahme eines Lebensmittelstücks dienenden, abschliessbaren Aufnehmer aufweist, über den mit den Lebensmittelstücken versehenen Behälter verschoben.

In einem zweiten Schritt wird das Aufnahmewerkzeug aus einer ersten in eine zweite Position gedreht, wodurch der Aufnehmer, der vorzugsweise der Form und Grösse der Lebensmittelstücke angepasst ist, in den Behälter eintaucht und ein Lebensmittelstück erfasst.

In einem dritten Schritt wird ein Schliessteil über den Aufnehmer oder der Aufnehmer hinter das Schliessteil geführt, so dass das aufgenommene Lebensmittelstück in den Aufnehmer eingeschlossen wird.

In einem vierten und fünften Schritt, die gegenseitig austauschbar sind, wird das Aufnahmewerkzeug über das Aufnahmeteil verschoben und aus der zweiten in die erste Position gedreht.

In einem sechsten Schritt wird das Schliessteil aus dem Bereich des Aufnehmers oder der Aufnehmer aus dem Bereich des Schliessteils weggeführt, so dass der Aufnehmer geöffnet wird und das Lebensmittelstück aus dem Aufnehmer in das Aufnahmeteil fallen kann.

In einer vorzugsweisen Ausgestaltung der Vorrichtung wird der Behälter vor der Durchführung des zweiten Schritts angehoben und nach Durchführung des zweiten Schritts wieder abgesenkt, so dass das Aufnahmewerkzeug auf niederer Höhe zu und weg führbar ist. Damit wird gewährleistet, dass das vorzugsweise löffelartige Aufnahmewerkzeug genügend tief in den Behälter eingreifen kann.

In einer weiteren vorzugsweisen Ausgestaltung der Vorrichtung wird der Behälter während der Durchführung des zweiten Schritts einer Vibration unterworfen, so dass der Aufnehmer nach dessen Einführung in den Behälter rasch und zuverlässig ein einzelnes Lebensmittelstück erfassen kann.

Die erfindungsgemässe Vorrichtung erlaubt daher, mit nur einem Werkzeug ein einzelnes Lebensmittelstück zu erfassen und in ein Aufnahmeteil einzulegen. Eine zusätzliche der Vereinzelung der Lebensmittelstücke dienende Vorstufe wird daher nicht benötigt. Zudem werden die Lebensmittelstücke mittels der erfindungsgemässen Vorrichtung rasch vom Behälter zum Aufnahmeteil befördert, so dass gegebenenfalls erwärmte Lebensmittelstücke kaum an Wärme verlieren.

Besonders wesentlich ist ferner, dass die Lebensmittelstücke nicht ergriffen oder angesaugt, sondern vom Aufnehmer schonend aufgenommen werden, wodurch Beschädigungen der Lebensmittelstücke vermieden werden. Nach der Aufnahme der Lebensmittelstücke wird der beispielsweise schalen- oder halbkugelförmige Aufnehmer abgeschlossen, so dass das aufgenommene Lebensmittelstück sicher gehalten ist. Um zu vermeiden, dass durch den Schliessvorgang Beschädigungen des Lebensmittelstücks verursacht werden, wird vor dem Schliessvorgang ein mechanisches Teil vor den Aufnehmer geführt, welches das Lebensmittelstück zurückstösst. Besonders vorteilhaft kann dies durch das Schliessteil selbst bewirkt werden. In einer vorzugsweisen Ausgestaltung weist das Schliessteil daher einen eine Öffnung zumindest teilweise umschliessenden Rahmen auf, der während der Durchführung des zweiten Schritts den Aufnehmer umrahmt und vor der Durchführung des dritten Schritts von unten über den Aufnehmer geführt wird, so dass das Lebensmittelstück in den Aufnehmer hinein geschoben wird. Während des dritten Schritts wird das Schliessteil zurück und mindestens soweit über den Aufnehmer geführt, dass das Lebensmittelstück im Aufnehmer eingeschlossen wird.

In einer weiteren vorzugsweisen Ausgestaltung werden die Lebensmittelstücke vom Aufnehmer an ein trichterförmiges Zwischenstück abgegeben, mittels dessen die Lebensmittelstücke geleitet, ausgerichtet, optisch kontrolliert und/oder aufwärmt und dem Aufnahmeteil, gegebenenfalls nach Betätigung eines Schiebers präzise zugeführt werden.

Im Trichter sind beispielsweise optische Überwachungsmittel, beispielsweise eine Fotodiode und eine Leuchtdiode, vorgesehen, mittels derer der Einwurf eines Lebensmittelstücks geprüft wird. Sofern in den Trichter oder in einen einer Reihe von Trichtern kein Lebensmittelstück eingeworfen wurde, wird der Bestückungsvorgang wiederholt, so dass eine optimale Qualität der gefertigten Produkte resultiert.

Nachfolgend wird die Erfindung anhand von Zeichnungen näher erläutert. Dabei zeigt:
- Figur 1: in schematischer Darstellung eine erfindungsgemässe Vorrichtung 1 mit einem Aufnahmewerkzeug 2, das einen schalenartigen Aufnehmer 21 aufweist, der mittels eines Schliesswerkzeugs 3 abschliessbar ist;
- Figur 2: das Aufnahmewerkzeug 2 und das Schliesswerkzeug 3 von Figur 1, gehalten mittels einer ersten und einer zweiten Welle 76, 66, die drehbar gelagert und mittels Kolben 67 drehgleich gekoppelt sind;
- Figur 3: einen Schnitt entlang der Linie A-A in Fig. 2;
- Figur 4: einen Schnitt entlang der Linie B-B in Fig. 2;
- Figur 5: das Aufnahmewerkzeug 2 im Aufnahmebereich vor der Aufnahme eines Lebensmittelstücks 5 bzw. einer Nuss;
- Figur 6: das nach unten gedrehte Aufnahmewerkzeug 2 im Aufnahmebereich während der Aufnahme eines Lebensmittelstücks 5;
- Figur 7: das Aufnahmewerkzeug 2 im Aufnahmebereich nach der Aufnahme eines Lebensmittelstücks 5;
- Figur 8: das Aufnahmewerkzeug 2 im Aufnahmebereich nach dem Abschliessen des Aufnehmers 21;
- Figur 9: das zurückgedrehte Aufnahmewerkzeug 2 im Aufnahmebereich oder im Abgabebereich mit abgeschlossenem Aufnehmer 21;
- Figur 10: das zurückgedrehte Aufnahmewerkzeug 2 im Abgabebereich nach dem Öffnen des Aufnehmers 21 während der Abgabe des Lebensmittelstücks 5;
- Figur 11: die Vorrichtung 1 mit dem nach unten gedrehten Aufnahmewerkzeug 2 im Aufnahmebereich während der Aufnahme eines Lebensmittelstücks 5;
- Figur 12: die Vorrichtung 1 mit dem Aufnahmewerkzeug 2 im Aufnahmebereich nach der Aufnahme eines Lebensmittelstücks 5;
- Figur 13: die Vorrichtung 1 mit dem Aufnahmewerkzeug 2 nach dem Abschliessen des Aufnehmers 21; und
- Figur 14: das Aufnahmewerkzeug 2 im Abgabebereich mit einem trichterförmigen Zwischenstück 25, das der Durchführung sowie präzisen Positionierung und gegebenenfalls der Erwärmung der Lebensmittelstücks 5 dient.

Figur 1 zeigt in schematischer Darstellung eine erfindungsgemässe Vorrichtung 1 in vorzugsweiser Ausgestaltung. Die Vorrichtung 1 weist wenigstens ein Aufnahmewerkzeug 2 auf, das zwischen einem Aufnahmebereich und einem Abgabebereich verschiebbar und um eine Achse x1 drehbar ist. Das löffelartige Aufnahmewerkzeug 2 weist einen drehbar gehaltenen Hebel 22 mit einem der Aufnahme eines Lebensmittelstücks 5 dienenden Aufnehmer 21 auf, der mittels eines Schliesswerkzeugs 3 abschliessbar ist.

Im Aufnahmebereich ist eine Speichervorrichtung 4 mit einem mit Lebensmittelstücken 5, Nüssen oder Mandeln, gefüllten Behälter 41 vorgesehen, der mittels eines Hebeaktuators 44 angehoben und abgesenkt werden kann (siehe Position 41' des Behälters). Dazu ist dessen Aktuatorwelle 441 über eine Verbindungsplatte 43, Schrauben 46 und elastische Verbindungselemente 42 mit dem geneigten Behälter 41 verbunden. Mit dem Behälter 41 ist ferner ein Vibrationsaktuator 45 verbunden, durch den der Behälter 41 während der Aufnahme eines Lebensmittelstücks 5 einer Vibration unterworfen wird.

Die Aufnahme und Abgabe eines Lebensmittelstücks 5 erfolgt in mehreren Schritten, die in Figur 1 schematisch dargestellt sind.

In einem ersten Schritt wird das Aufnahmewerkzeug 2 über den Behälter 41 verschoben.

In einem zweiten Schritt wird das Aufnahmewerkzeug 2 aus einer ersten in eine zweite Position gedreht, wodurch der Aufnehmer 21 in den Behälter 41 eintaucht, ein Lebensmittelstück 5 erfasst und weiter nach oben geführt wird. Dabei wird das Aufnahmewerkzeug 2 um einen Winkel a in eine senkrechte Lage und weiter um einen Winkel b in eine Lage gedreht, in der das aufgenommene Lebensmittelstück 5 vom Aufnehmer 21 sicher gehalten wird. Die Winkel a und b liegen typischerweise im Bereich von 15° bis 45°, können jedoch, je nach Ausgestaltung der Vorrichtung in einem weiteren Bereich gewählt werden.

Sofern das Aufnahmewerkzeug 2 nun nach Aufnahme eines Lebensmittelstücks 5 über den Abgabebereich verschoben und dann zurück gedreht wird, so ist der Abgabepunkt nicht präzise definiert. In einem dritten Schritt wird der Aufnehmer 21 daher abgeschlossen, wobei ein Schliessteil 32 eines Schliesswerkzeugs 3 über den Aufnehmer 21 oder der Aufnehmer 21 hinter das Schliessteil 32 geführt wird.

In einem vierten und fünften Schritt wird das Aufnahmewerkzeug 2 über das Aufnahmeteil 11 geführt und aus der zweiten in die erste Position zurück gedreht. Die Reihenfolge der Schritte vier und fünf kann beliebig gewählt werden. Beispielsweise wird das Aufnahmewerkzeug 2 zuerst gedreht und dann verschoben.

In einem sechsten Schritt wird das Schliessteil 32 aus dem Bereich des Aufnehmers 21 oder der Aufnehmer 21 aus dem Bereich des Schliessteils 32 weggeführt, so dass das Lebensmittelstück 5 aus dem Aufnehmer 21 in das Aufnahmeteil 11 fallen kann.

Das Aufnahmeteil 11 kann ein Lebensmittelteil oder auch ein Verpackungselement oder ein Werkzeug sein, das mit einem Lebensmittelstück 5 zu bestücken ist. Beispielsweise wird eine Schokoladenhalbkugel mit einer Mandel, einer Haselnuss oder mit einer Kirsche bestückt. In Figur 1 wird ein Werkzeug oder eine Verpackung 10 bestückt, die auf einem Förderband 15 zu-und weggeführt wird.

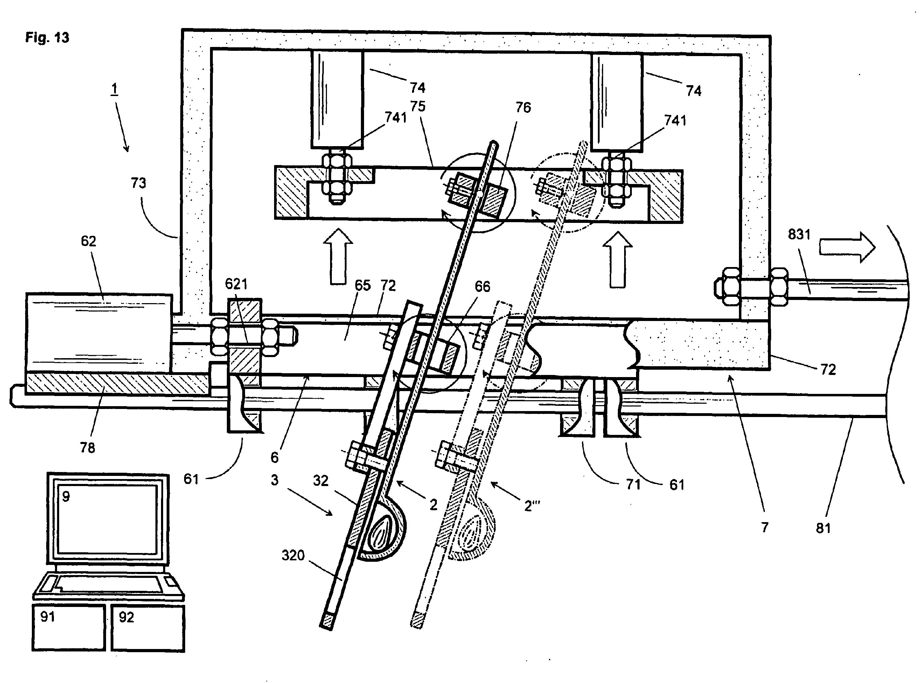

Wie in Figur 1 weiter schematisch dargestellt ist, sind vorzugsweise mehrere parallel geführte und um die Achse x1 drehbare Aufnahmewerkzeuge 2, 2', 2'', ... vorgesehen, so dass mehrere Aufnahmeteile 11 synchron bestückt werden können. Wie in Figur 13 schematisch gezeigt, können auch mehrere Reihen von Aufnahmewerkzeugen 2, 2', 2'', ... vorgesehen sein.

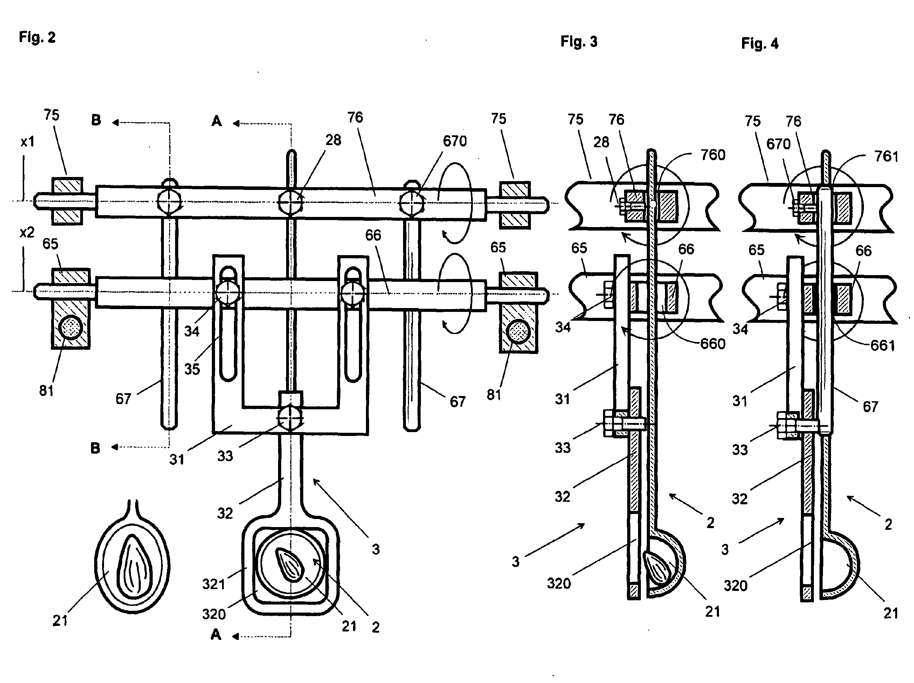

Figur 2 zeigt das mittels einer Schraube 28 an einer Haltewelle 76 befestigte Aufnahmewerkzeug 2 von vorn. Die Haltewelle 76 ist in einem Halterahmen 75 um die Achse x1 drehbar gelagert, so dass das Aufnahmewerkzeug 2, wie oben beschrieben, aus der ersten in die zweite Position und wieder zurück drehbar ist.

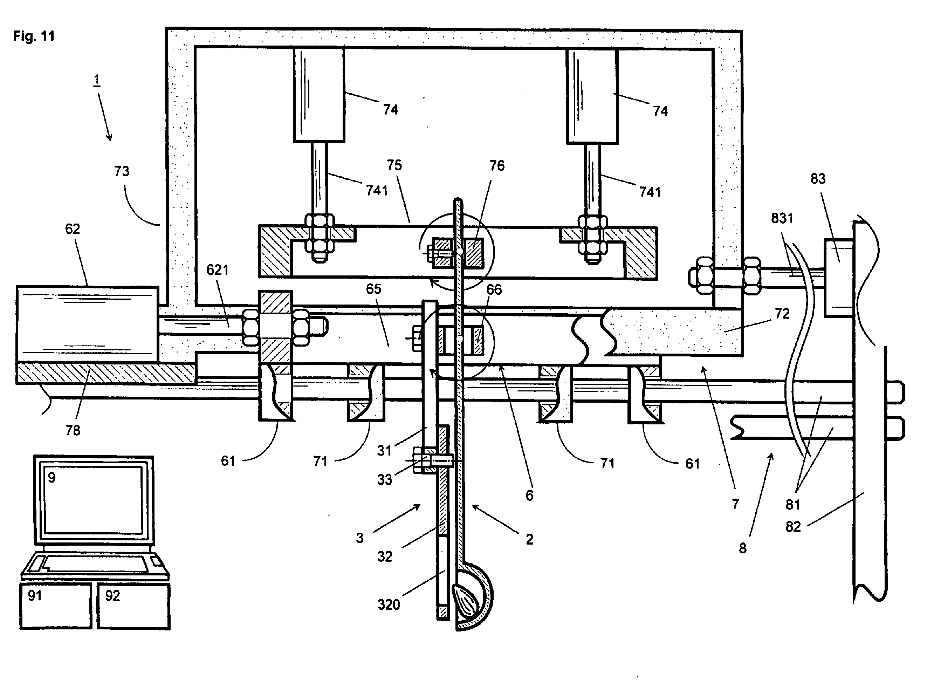

Unterhalb der Haltewelle 76 ist eine Antriebswelle 66 in einem Antriebsrahmen 65 um eine zur ersten Achse x1 parallele zweite Achse x2 drehbar gelagert. Der Antriebsrahmen 65 ist mittels Schlittenwellen 81 (siehe Figur 11) verschiebbar gelagert, so dass die Antriebswelle 66 gegenüber der Haltewelle 76 verschiebbar ist, wobei die Parallelität der Achsen x1, x2 aufrecht erhalten bleibt. Wie in Figur 2 und Figur 4 (Schnitt entlang der Linie B-B in Fig. 2) gezeigt, weist die Antriebswelle 66 zwei zylindrische Bohrungen 661 auf, in denen Kolben 67 verschiebbar gelagert sind, die in zylindrischen Bohrungen 761 der Haltewelle 76 mittels Schrauben 670 befestigt sind. Durch gegenseitige Verschiebungen der Wellen 66, 76 wird daher bewirkt, dass die Kolben 67 in den zylindrischen Bohrungen 661 ein oder aus fahren, wobei beide Wellen 66, 76 stets je um dasselbe Mass gedreht werden. Das Aufnahmewerkzeug 2, dessen Hebel 22 durch eine zylindrische Bohrung 660 in der Antriebswelle 66 geführt und mittels einer Schraube 28 in einer zylindrischen Bohrung 760 in der Haltewelle 76 befestigt ist (siehe Figur 3, Schnitt entlang der Linie A-A in Fig. 2), und das mit der Antriebswelle 66 verbundene Schliesswerkzeug 3 werden bei gegenseitigen Verschiebungen der Wellen 66, 76 daher ebenfalls um dasselbe Mass gedreht. Die zueinander parallele Ausrichtung des Aufnahmewerkzeugs 2 und des Schliesswerkzeugs 3 bleibt daher unabhängig von der gegenseitigen Verschiebung der zueinander parallel ausgerichteten Wellen 66, 76 stets aufrecht erhalten. Durch die gegenseitige Verschiebung der Wellen 66, 76 können die Aufnahme- und Schliesswerkzeuge 2, 3 daher gedreht oder auseinander gezogen werden, wodurch das Schliessteil 32 des Schliesswerkzeugs 3 durch eine Parallelverschiebung über den Aufnehmer 21 oder der Aufnehmer 21 hinter das Schliessteil 32 geführt wird.

Das Schliesswerkzeug 3 weist ein mit Justierschlitzen 35 versehenes und mittels Schrauben 34 an der Antriebswelle 66 befestigtes Verbindungsstück 31 auf, das mittels einer Schraube 33 mit dem Schliessteil 32 verbunden ist. Am unteren Ende des Schliessteils 32 ist ein eine Öffnung 320 umschliessender Rahmen 321 vorgesehen, der während der Aufnahme eines Lebensmittelstücks 5 den Aufnehmer 21 umrandet.

Figur 2 zeigt ferner einen zusätzlichen Aufnehmer 21 mit einer oval geformten Schale, die zur Aufnahme von länglichen Objekten geeignet ist.

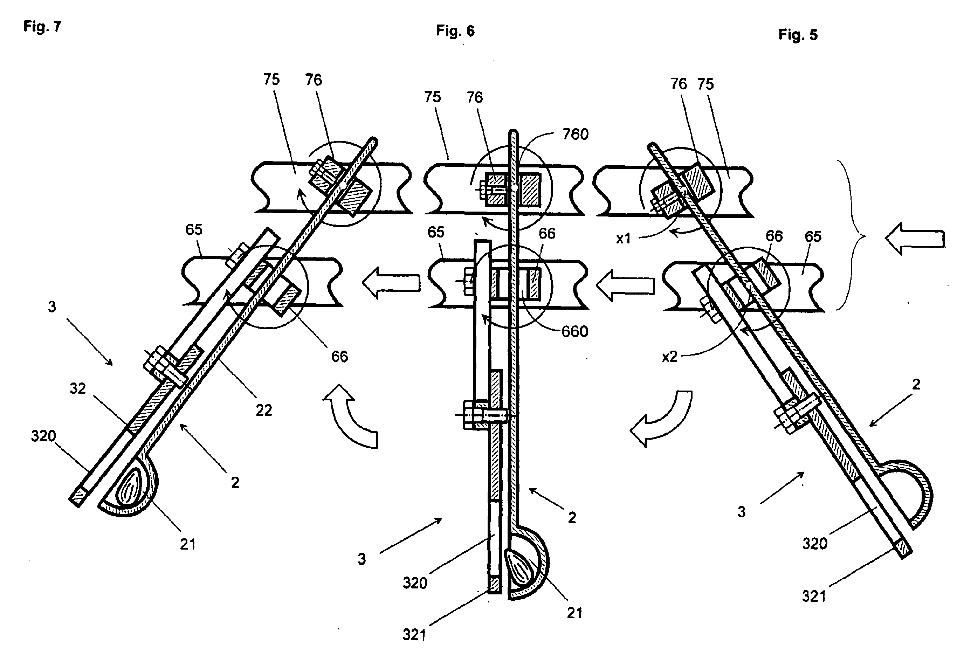

Die Bewegungen der Aufnahme- und Abgabewerkzeuge 2, 3 sowie der Wellen 66, 77 und Rahmen 65, 75 während der Aufnahme und Abgabe eines Lebensmittelstücks 5 werden nachstehend unter Bezugnahme auf die Figuren 5 bis 10 nachstehend nochmals kurz erläutert.

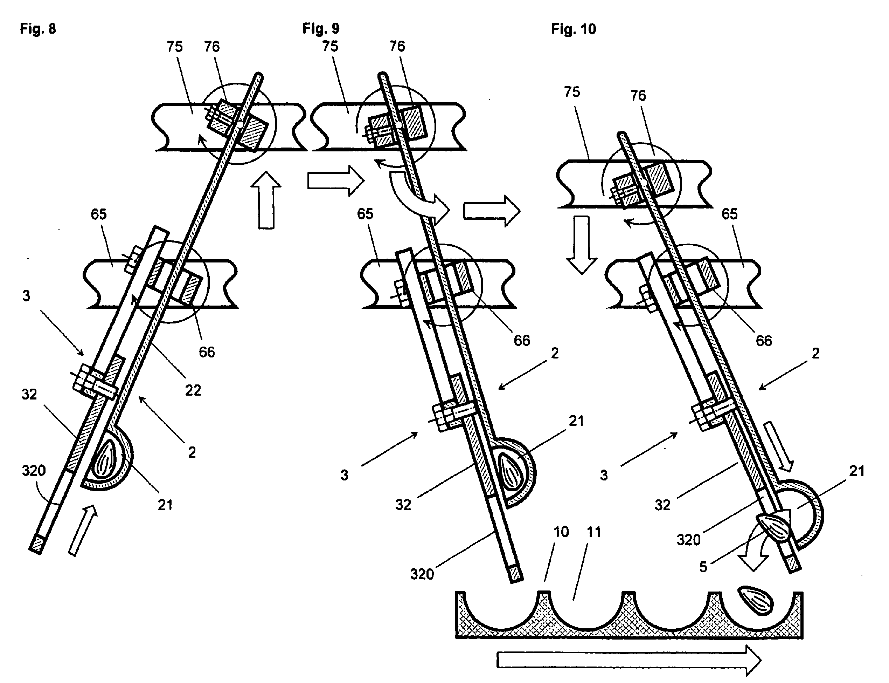

Figur 5 zeigt die Aufnahme- und Abgabewerkzeuge 2, 3 in der Ausgangsstellung nach Inbetriebnahme der Vorrichtung 1 oder nachdem ein Vorgang zum Einlegen eines Lebensmittelstücks 5, wie in Figur 10 gezeigt, abgeschlossen wurde.

In einem ersten Schritt wird das Aufnahmewerkzeug 2 über den Behälter 41 verschoben und in einem anschliessenden zweiten Schritt, gegebenenfalls nachdem der Behälter 41 angehoben und einer Vibration unterworfen wurde, nach unten (siehe Figur 6) und weiter auf die andere Seite nach oben gedreht (siehe Figur 7). Zur Verschiebung der Aufnahme- und Abgabewerkzeuge 2, 3 Behälter 41 werden beide Rahmen 65, 75 und Wellen 66, 76 um dasselbe Mass verschoben. Für die Drehung der Aufnahme- und Abgabewerkzeuge 2, 3 wird lediglich der Antriebsrahmen 65 mit der Antriebswelle 66 weiter geschoben. Die Aufnahme- und Abgabewerkzeuge 2, 3 sind dabei derart gegenseitig justiert, dass der Rahmen 321 nach Aufnahme eines Lebensmittelstücks 5 nach oben geführt wird, um dieses in den Aufnehmer 21 hineinzustossen. In Figur 7 liegt das Lebensmittelstück 5 daher innerhalb des Aufnehmers 21, so dass es durch den nachfolgenden Schliessvorgang nicht beschädigt werden kann.

Das Schliessen des Aufnehmers erfolgt durch das in Figur 8 gezeigte Anheben des Halterahmens 75 und der Haltewelle 76, wobei die Aufnahme- und Abgabewerkzeuge 2, 3 soweit parallel gegeneinander verschoben werden, bis der Aufnehmer 21 zumindest teilweise durch das Schliessteil 32 abgeschlossen ist.

Wie in Figur 9 gezeigt werden die Aufnahme- und Abgabewerkzeuge 2, 3 nach Abschluss des Schliessvorgangs an den Abgabebereich zurück verschoben und zurück gedreht.

Anschliessend wird der Halterahmen 75 mit dem Aufnahmewerkzeug 2 wieder nach unten verschoben, bis das Lebensmittelstück 5 durch die Öffnung 320 austreten und in das Aufnahmeteil 11 hinein fallen kann.

Die Verschiebung der Rahmen 65, 75 erfolgt vorzugsweise mit der in den Figuren 11 bis 13 schematisch gezeigten Vorrichtung, die einen mittels Lagerelementen 71 auf Schlittenwellen 81 gelagerten Schlitten 7 mit einem Tragrahmen 73 aufweist. Die Schlittenwellen 81 sind mittels eines Gestänges 82 gehalten, an dem ein Schlittenaktuator 83 vorgesehen ist, dessen Welle 84 den Schlitten 7 zwischen dem Aufnahmebereich und dem Abgabebereich hin und her bewegt. Am Tragrahmen 73 sind zwei Schliessaktuatoren 74 vorgesehen, deren Wellen 741 den Tragrahmen 76 halten und bei Bedarf anheben oder ansenken.

Auf einer Verbindungsplatte 78 des Schlittens 7 ist ein Antriebsaktuator 62 vorgesehen, dessen Welle 621 den von einem Schlittenrahmen 72 umschlossenen und mittels Lagerelementen 61 mit den Schlittenwellen 81 verbundenen Antriebsrahmen 65 vor und zurück verschieben kann.

In Figur 11 sind ferner eine Steuervorrichtung 9 sowie elektrische und pneumatische Energieversorgungseinheiten 91, 92 gezeigt, mittels denen die elektrisch, pneumatisch oder hydraulisch arbeitenden Aktuatoren 44, 45, 62, 74, 83 gesteuert und betrieben werden.

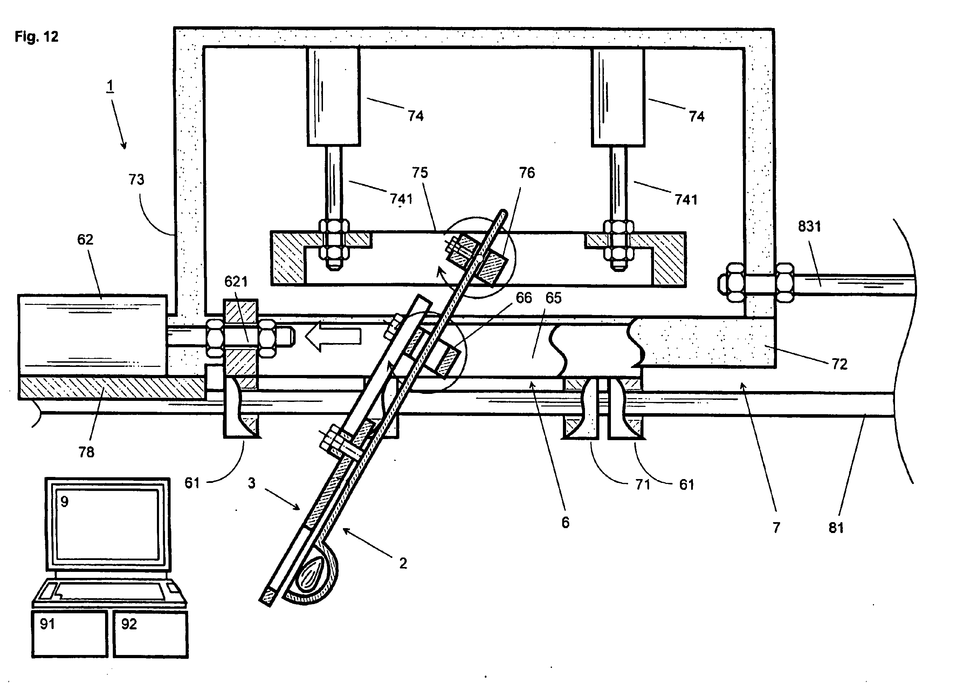

Figur 11 zeigt das Aufnahmewerkzeug 2 nach dem Erfassen eines Lebensmittelstücks 5. In Figur 12 wurde der Antriebsrahmen 65 weiter nach vorn gezogen und das Aufnahmewerkzeug 2 in die vordere Endposition gedreht. In Figur 13 wurde der Halterahmen 75 mit dem Aufnahmewerkzeug 2 nach oben gezogen, wodurch der Aufnehmer 21 mittels des Schliessteils 32 abgeschlossen wurde. In dieser Position oder nach dem Zurückdrehen der Aufnahme-und Schliesswerkzeuge 2, 3 kann der Schlitten 7 zurück an den Abgabebereich gefahren werden. Die in den Figuren 11 bis 13 gezeigte Ausgestaltung der Vorrichtung 1 erlaubt die einfache Montage weiterer Reihen mit Aufnahme- und Schleisswerkzeugen 2, 3.

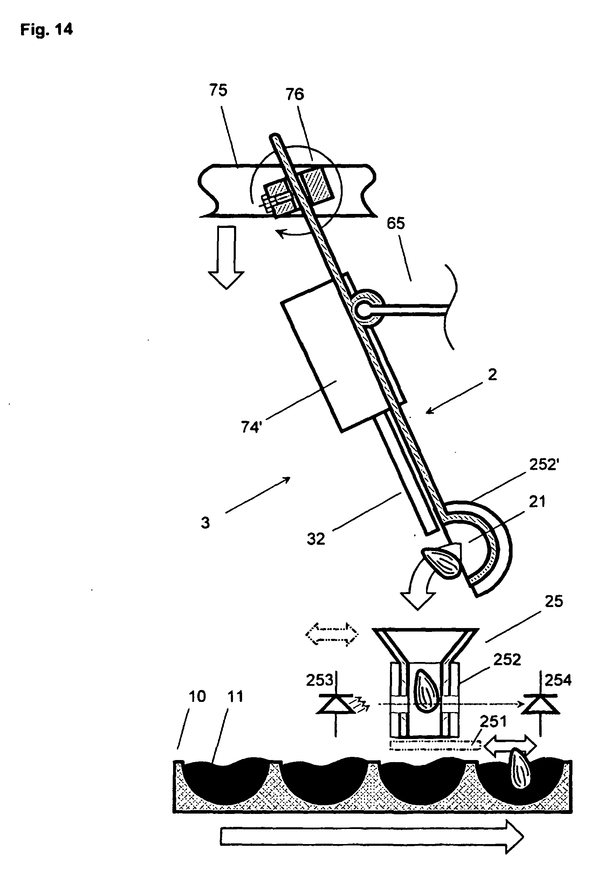

Die erfindungsgemässe Vorrichtung 1 wurde in bevorzugten Ausgestaltungen beschrieben und dargestellt. Anhand der erfindungsgemässen Lehre sind jedoch weitere fachmännische Ausgestaltungen realisierbar. Wie in Figur 14 gezeigt, sind auch andere Mittel einsetzbar um die Aufnahme- und Schliesswerkzeuge 2, 3 zu verschieben und zu drehen. beispielsweise kann das Aufnahmewerkzeug 2 auch mittels eines Hebels 65 gedreht werden. Ferner kann das Schliesswerkzeug 3 mit einem Schliessaktuator 74' direkt am Aufnahmewerkzeug 2 befestigt werden, wodurch der beschriebene Rahmenantrieb entfällt. Ferner können, wie in den Figuren 1 und 13 gezeigt, eine oder mehrere Reihen bzw. eine Matrix mit Aufnahmewerkzeugen 2 vorgesehen und synchron betätigt werden, so dass eine Matrix mit Aufnahmeschalen 11 in einem einzigen Arbeitsgang bestückt werden kann.

Ferner kann ein der Aufnahme und Durchleitung der Lebensmittelstücke 5 dienendes trichterförmiges Zwischenstück 25 vorgesehen sein, das verschiedene Funktionen erfüllt. Einerseits kann das trichterförmige Zwischenstück 25 zur präzisen Positionierung und Abgabe der Lebensmittelstücke 5 verwendet werden. Andererseits oder zusätzlich kann das an die Lebensmittelstücke 5 angepasste Zwischenstück 25 dazu dienen die Lebensmittelstücke 5 senkrecht auszurichten. Ferner kann eine Lichtschranke mit Leucht- und Fotodiode 253, 254 vorgesehen sein, mittels der die Steuervorrichtung 9 den korrekten Transfer der Lebensmittelstücke 5 überwacht. Sofern eine Reihe oder Matrix mit Zwischenstücken 25 vorgesehen ist, die mittels eines Schiebers 251 geöffnet und geschlossen werden können, so können die Zwischenstücke 25 nach Detektion einer Fehlbestückung entleert und in einem nächsten Arbeitsgang neu bestückt werden. Die Reihe oder Matrix mit Zwischenstücken 25 kann auch verschiebbar gelagert sein, so dass anstelle des Aufnahmewerkzeugs 2 die Zwischenstücke 25 zyklisch zwischen dem Aufnahmebereich und dem Abgabebereich verschoben werden. Die Zwischenstücke 25 oder die Reihe oder Matrix mit Zwischenstücken 25 kann ferner mit wenigstens einem Heizelement 252 versehen sein, so dass die Lebensmittelstücke 5 unmittelbar vor dem Einlegen oder Einwerfen noch auf eine gewünschte Temperatur erwärmt werden können. Besonders vorteilhaft kann auch der Aufnehmer 21 des Aufnahmewerkzeugs 2 mittels eines Heizelements 252' erwärmt werden (siehe Figur 14).

### Bezugszeichenliste

- 1: Vorrichtung
- 10: Werkzeug, Verpackung
- 11: Aufnahmeschale
- 15: Förderband
- 2: Aufnahmewerkzeug
- 2', 2'': weitere synchron geführte Aufnahmewerkzeuge
- 21: Aufnehmer
- 22: Hebel
- 25: Zwischenstück
- 251: Schieber
- 252: Heizelement
- 253: Leuchtdiode
- 254: Fotodiode
- 3: Schliesswerkzeug
- 31: Verbindungsstück
- 32: Schliessteil
- 320: Öffnung im Schliessteil 32
- 321: Rahmen der die Öffnung 320 umschliesst
- 33: Schraube zur Montage des Schliessteils 32
- 34: Schraube zur Montage des Verbindungsstücks 31
- 35: Justierschlitz
- 4: Speichervorrichtung
- 41: Behälter (in einer ersten Position)
- 41': Behälter (in einer zweiten Position)
- 42: elastische Verbindungselemente
- 43: Verbindungsplatte
- 44: Hebeaktuator
- 441: Aktuatorwelle
- 45: Vibrationsaktuator
- 46: Schrauben
- 5: Lebensmittelstücke (Kerne, Nüsse, Früchte, ...)
- 6: Antriebseinheit
- 61: Lagerelemente der Antriebseinheit 6
- 62: Antriebsaktuator
- 63: Aktuatorwelle
- 65: Antriebsrahmen
- 66: Antriebswelle
- 660: zylindrische Bohrungen zur Durchführung des Hebels 22
- 661: zylindrische Bohrung zur Lagerung des Kolbens 67
- 67: Kolben
- 670: Schraube zur Befestigung des Kolbens 67
- 7: Schlitten
- 71: Lagerelemente des Schlittens 7
- 72: Schlittenrahmen
- 73: Halterahmen
- 74, 74': Schliessaktuator
- 741: Aktuatorwelle
- 75: Halterahmen
- 76: Haltewelle
- 760: zylindrische Bohrung für die Montage des Hebels 22
- 761: zylindrische Bohrung für die Montage des Kolbens 67
- 78: Verbindungsplatte
- 8: Schlittenhalterung
- 81: Schlittenwelle
- 82: Gestänge
- 83: Schlittenaktuator
- 84: Aktuatorwelle
- 9: Steuervorrichtung
- 91: elektrische Energieversorgungseinheit
- 92: pneumatische Energieversorgungseinheit

### Literaturverzeichnis:

[1] WO 98/41105
[2] DE 42 20 648 A1

## Patentansprüche

1. Verfahren zum automatischen Einlegen von einzelnen in einem Behälter (41) gespeicherten Lebensmittelstücken (5), wie Samankerne, Früchte oder Teile davon, in ein Aufnahmeteil (11), insbesondere in ein Werkzeug, in eine Verpackung oder in ein Lebensmittelteil, mit wenigstens einem Aufnahmewerkzsug (2), das zum Erfassen, Transportieren und Abgeben der Lebensmittelstücke (5) geeignet ist, **dadurch gekennzeichnet, dass**
a) in einem ersten Schritt das verschiebbargelagerts Aufnahmewerkzeug (2), das einen drehbar gehaltenen Hebel (22) mit einem der Aufnahme eines Lebensmittelstücks (5) dienenden, abschliessbaren Aufnehmer (21) aufweist, über den Behälter (41) verschoben wird,
b) in einem zweiten Schritt das Aufnahmewerkzeug (2) aus einer ersten in eine zweite Position gedreht wird, wodurch der Aufnehmer (21) in den Behälter (41) eintaucht, ein Lebensmittelstück (5) erfasst und weiter nach oben geführt wird,
c) in einem dritten Schritt ein Schliessteil (32) über den Aufnehmer (21) oder der Aufnehmer (21) hinter das Schliessteil (32) geführt wird,
d) in einem vierten und fünften Schritt das Aufnahmewerkzeug (2) über das Aufnahmeteil (11) geführt und aus der zwelten in die erste Position gedreht wird, und
e) in einem sechsten Schritt das Schliessteil (32) aus dem Bereich des Aufnehmers (21) oder der Aufnehmer (21) aus dem Bereich des Schliessteils (32) weggeführt wird, so dass das Lebensmittelstück (5) aus dem Aufnehmer (21) in das Aufnahmeteil (11) fallen kann.

2. Verfahren nach Anspruch 1, **dadurch gekennzeichnet, dass** der Behälter (41) vor der Durchführung des zweiten Schritts angehoben und nach Durchführung des zweiten Schritts abgesenkt wird und/oder dass der Behälter (41) während der Durchführung des zweiten Schritts einer Vibration unterworfen wird.

3. Verfahren nach Anspruch 1 oder 2, **dadurch gekennzeichnet, dass** das Schliessteil (32) einen eine Öffnung (320) zumindest teilweise umschliessenden Rahmen (321) aufweist, der während der Durchführung des zweiten Schritts den Aufnehmer (21) umrahmt und vor der Durchführung des dritten Schritts von unten über den Aufnehmer (21) geführt wird, so dass das Lebensmittelstück (5) in den Aufnehmer (21) hinein geschoben wird.

4. Verfahren nach Anspruch 1 oder 2, **dadurch gekennzeichnet, dass** die Lebensmittelstücke (5) vom Aufnehmer (21) an vorzugsweise trichterförmiges Zwischenstück (25) abgegeben werden, mittels dessen die Lebensmittelstücke (5) geleitet, ausgerichtet, optisch kontrolliert und/oder aufwärmt und dem Aufnahmeteil (11), gegebenenfalls nach Betätigung eines Schiebers (252) präzise zugeführt werden.

5. Vorrichtung zur Durchführung des Verfahrens nach einem der Ansprüche 1 bis 4, mit einem Behälter (41), indem Lebensmittelstücke (5), wie Samenkerne, Früchte oder Teile davon, gespeichert sind und mit wenigstens einem Aufnahmewerkzeug (2), mittels dessen Lebensmittelstücke (5) aufgenommen, transportiert und in ein Aufnahmeteil (11), insbesondere in ein Werkzeug, in eine Verpackung oder in ein Lebensmittelteil abgegeben werden können, **dadurch gekennzeichnet, dass** das Aufnahmewerkzeug (2), das einen drehbar gehaltenen Hebel (22) mit einem der Aufnahme eines Lebensmittelstücks (5) dienenden Aufnehmer (21) aufweist, derart verschiebbar gelagert ist, dass es vor, über den Behälter (41), und zurück, über die zu bestückenden Aufnahmeteile (11), verschiebbar ist, dass Antriebsmittel (62, 621, 65, 66, 67) vorgesehen sind, mittels denen das Aufnahmewerkzeug (2) aus einer ersten in eine zweite und von der zweiten wieder in die erste Position drehbar ist, so dass der Aufnehmer (21) durch die im Behälter (41) gespeicherten Lebensmittelstücke (5) hindurch und wieder zurück führbar ist, und dass ein Schliesswerkzeug (3) vorgesehen ist, mittels dessen der Aufnehmer (21) abschliessbar ist und wieder geöffnet werden kann.

6. Vorrichtung nach Anspruch 5, **dadurch gekennzeichnet, dass** der elastisch gelagerte Behälter (41) mittels eines Hebeaktuators (44) anhebbar und absenkbar und/oder dass der elastisch gelagerte Behälter (41) mittels eines Vibrationsaktuators (45) einer Vibration unterwerfbar ist.

7. Vorrichtung nach Anspruch 5 oder 6, **dadurch gekennzeichnet, dass** das Schliessteil (32) einen eine Öffnung (320) zumindest teilweise umschliessenden Rahmen (321) aufweist, der während der Aufnahme eines Lebensmittelstücks (5) den Aufnehmer (21) umrahmt und nach der Aufnahme eines Lebensmittelstücks (5) von unten in den Bereich des Aufnehmers (21) geführt wird, so dass das Lebensmittelstück (5) in den Aufnehmer (21) hinein geschoben wird.

8. Vorrichtung nach Anspruch 5, 6 oder 7, **dadurch gekennzeichnet, dass** ein der Durchführung, der Ausrichtung, der Erwärmung und/oder der optischen Überwachung der Lebensmittelstücke (5) dienendes, vorzugsweise trichterförmiges Zwischenstück (25) vorgesehen ist, das gegebenenfalls mittels eines Schiebers (252) abschliessbar ist.

9. Vorrichtung nach einem der Ansprüche 5 bis 9, **dadurch gekennzeichnet, dass** der Hebel (22) des Aufnahmewerkzeugs (2) an einer in einem Halterahmen (75) drehbar gelagerten Haltewelle (76) befestigt ist, die mittels wenigsten eines Kolbens (67) mit einer parallel dazu ausgerichteten, in einem Antriebsrahmen (65) drehbar gelagerten Antriebswelle (66) drehfest gekoppelt ist, so dass das mit der Antriebswelle (66) verbundene Schliesswerkzeug (3) unabhängig vom Abstand der gegeneinander verschiebbaren Rahmen (75, 66) stets parallel zum Aufnahmewerkzeug (2) gehalten ist.

10. Vorrichtung nach Anspruch 9, **dadurch gekennzeichnet, dass** der Antriebsrahmen (65) mittels eines Antriebsaktuators (62) parallel zum Halterahmen (75) verschiebbar ist und/oder dass der Halterahmen (75) mittels wenigstens eines Schliessaktuators (74) relativ zum Antriebsrahmen (65) anhebbar ist.

11. Vorrichtung nach Anspruch 10, **dadurch gekennzeichnet, dass** eine Schlittenhalterung (8) mit Schlittenwellen (81) vorgesehen ist, mittels denen ein von einem Schlittenaktuator (83) angetriebener Schlitten (7) verschiebbar gelagert ist, an dem der mit dem Halterahmen (75) verbundene Schliessaktuator (74) und der mit dem Antriebsrahmen (65) verbundene Antriebsaktuator (62) befestigt sind.

12. Vorrichtung nach Anspruch 11, **dadurch gekennzeichnet, dass** der Antriebsrahmen (65) mittels der Schlittenwellen (81) verschiebbar gelagert ist.

13. Vorrichtung nach einem der Ansprüche 5 bis 12, **dadurch gekennzeichnet, dass** eine der Verfahrenssteuerung und der Verfahrenskontrolle dienende Steuereinheit (9) sowie Schaltelemente und Energiequellen für die elektrisch, hydraulisch oder pneumatisch betätigten Aktuatoren (44, 45, 62, 74, 83) vorgesehen sind.

14. Vorrichtung nach einem der Ansprüche 5 bis 13, **dadurch gekennzeichnet, dass** der Aufnehmer der Form und Grösse der Lebensmittelstücke (5) angepasst ist.

## Claims

1. A method for the automatic insertion of individual foodstuff pieces (5) which are stored in a container (41), such as kernels, fruit or parts thereof, into a receiver part (11), in particular into a tool, into a packaging or into a foodstuff part, with at least one receiver tool (2) which is suitable for seizing, transporting and dispensing the foodstuff pieces (5), **characterised in that**
a) in a first step, the displaceably mounted receiver tool (2), which comprises a rotatably held lever with a closable receiver (21) serving the receiving of a foodstuff piece (5), is displaced over the container (41),
b) in a second step, the receiver tool (2) is rotated from a first into a second position, by which means the receiver (21) dips into the container (41), seizes a foodstuff piece (5) and is led further upwards,
c) in a third step, a closure part (32) is led over the receiver (21), or the receiver (21) is led to behind the closure part (32),
d) in a fourth and fifth step, the receiver tool (2) is led over the receiver part (11) and is rotated from the second into the first position, and
e) in a sixth step, the closure part (32) is led away out of the region of the receiver (21) or the receiver (21) is led away out of the region of the closure part (32), so that the foodstuff piece (5) may fall out of the receiver (21) into the receiver part (11).

2. A method according to claim 1, **characterised in that** the container (41) is lifted before carrying out the second step, and is lowered after carrying out the second step and/or that the container (41) is subjected to a vibration during the implementation of the second step.

3. A method according to claim 1 or 2, **characterised in that** the closure part (32) comprises a frame (321) which encloses an opening (320) at least partly and which frames the receiver (21) during the implementation of the second step, and is led from below over the receiver (21) before implementing the third step, so that the foodstuff piece (5) is pushed into the receiver (21).

4. A method according to claim 1 or 2, **characterised in that** the foodstuff pieces (5) are dispensed from the receiver (21) to a preferably funnel-like intermediate piece (25), by way of which the foodstuff pieces (5) are guided, aligned, optically controlled, and/or warmed, and are fed in a precise manner to the receiver part (11), as the case may be, after actuation of a slider (252).

5. A device for carrying out the method according to one of the claims 1 to 4, with a container (41) in which foodstuff pieces (5) such as kernels, fruit or parts thereof, are stored, and with at least one receiver tool (2), by way of which foodstuff pieces (5) may be received, transported and dispensed into a receiver part (11), in particular into a tool, into a packaging or a foodstuff part, **characterised in that** the receiver tool (2) which comprises a rotatably held lever (22) with a receiver (21) serving for receiving a foodstuff piece (5), is displaceably mounted in a manner such that it may be displaced forward, over the container (41), and back, over the receiver parts (11) to be furnished, that drive means (62, 621, 65, 66, 67) are provided, by way of which the receiver tool (2) may be rotated from a first into a second, and from the second again into the first position, so that the receiver (21) may be led through the foodstuff pieces (5) stored in the container (41) and back again, and that a closure tool (3) is provided, by way of which the receiver (21) is closable and may be opened again.

6. A device according to claim 5, **characterised in that** the elastically mounted container (41) may be lifted and lowered by way of a lifting actuator (44), and/or that the elastically mounted container (41) may be subjected to a vibration by way of a vibration actuator (45).

7. A device according to claim 5 or 6, **characterised in that** the closure part (32) comprises a frame (321) which at least partially encloses an opening (320) and which frames the receiver (21) during the receiving of a foodstuff piece (5) and after the receiving of a foodstuff piece (5) is led from below into the region of the receiver (21), so that the foodstuff piece (5) is pushed into the receiver (21).

8. A device according to claim 5, 6 or 7, **characterised in that** a preferably funnel-like intermediate piece (25) is provided which serves the leading-through, the alignment, the warming and/or the optical monitoring of the foodstuff pieces (5), and may be closed, as the case may be, by way of a slider (252).

9. A device according to one of the claims 5 to 9, **characterised in that** the lever (22) of the receiver tool (2) is fastened on a holder shaft (76) which is rotatably mounted in a holder frame (75) and which is coupled in a rotational fixed manner by way of at least one piston (67) to a drive shaft (66) which is aligned parallel thereto and is rotatably mounted in a drive frame (65), so that the closure tool (3) which is connected to the drive shaft (66) is always held parallel to the receiver tool (2) independently of the distance of frames (75, 76) which may be displaced against one another.

10. A device according to claim 9, **characterised in that** the drive frame (65) is displaceable parallel to the holder frame (75) by way of a drive actuator (62) and/or that the holder frame (75) may be lifted relative to the drive frame (65) by way of at least one closure actuator (74).

11. A device according to claim 10, **characterised in that** a carriage holder (8) with carriage shafts (81) is provided, by way of which a carriage (7) driven by a carriage actuator (83) is displaceably mounted, on which carrier the closure actuator (74) connected to the holding arm (75) and the drive actuator (62) connected to the drive frame (65) are fastened.

12. A device according to claim 11, **characterised in that** the drive frame (65) is displaceably mounted by way of carriage shafts (81).

13. A device according to one of the claims 5 to 12, **characterised in that** a control unit (9) serving the method control and method regulation as well as switch elements and energy sources for the electrically, hydraulically or pneumatically actuated actuators (44, 45, 62, 74, 83) are provided.

14. A device according to one of the claims 5 to 13, **characterised in that** the receiver is adapted to the shape and size of the foodstuff pieces (5).

## Revendications

1. Procédé pour mettre automatiquement des pièces d'aliment (5) individuelles stockées dans un récipient (41), telles que des amandes, des fruits ou des morceaux de ceux-ci, dans un réceptacle (11), notamment dans un moule, dans un emballage ou dans une partie d'aliment, comprenant au moins un ustensile à godet (2) qui est destiné à saisir, transporter et délivrer les pièces d'aliment (5), **caractérisé en ce que :**
a) au cours d'une première étape, l'ustensile à godet (2) monté de manière à pouvoir être déplacé, qui présente un levier (22) monté de façon rotative, avec un godet (21) pouvant être fermé et destiné à contenir une pièce d'aliment (5), est déplacé au-dessus du récipient (41),
b) durant une deuxième étape, l'ustensile à godet (2) est pivoté d'une première à une seconde position, ce qui fait que le godet (21) plonge dans le récipient (41) saisit une pièce d'aliment (5) et est amené vers le haut,
c) lors d'une troisième étape, un obturateur (32) est amené devant le godet (21) ou le godet (21) est amené derrière l'obturateur (32),
d) au cours d'une quatrième et d'une cinquième étape, l'ustensile à godet (2) est amené au-dessus du réceptacle (11) et est pivoté de la seconde à la première position,
e) et, lors d'une sixième étape, l'obturateur (32) est enlevé de la zone du godet (21) ou le godet (21) enlevé de la zone de l'obturateur (32), de sorte que la pièce d'aliment (5) peut tomber du godet (21) dans le réceptacle (11) .

2. Procédé selon la revendication 1, **caractérisé en ce qu'**avant la deuxième étape, le récipient (41) est soulevé et, une fois la deuxième étape achevée, il est abaissé et/ou **en ce que** le récipient (41) est soumis à une vibration durant le déroulement de la deuxième étape.

3. Procédé selon la revendication 1 ou 2, **caractérisé en ce que** l'obturateur (32) présente un cadre (321) entourant au moins partiellement une ouverture (320), lequel encadre le godet (21) durant la deuxième étape et est amené par le bas sur le godet (21) avant le début de la troisième étape, de sorte que la pièce d'aliment (5) est introduite dans le godet (21).

4. Procédé selon la revendication 1 ou 2, **caractérisé en ce que** les pièces d'aliment (5) sont mises par le godet (21) dans une pièce intermédiaire (25), de préférence en forme d'entonnoir, au moyen de laquelle les pièces d'aliment (5) sont guidées, orientées, contrôlées visuellement et/ou réchauffées, avant d'être amenées de façon précise dans le réceptacle (11), éventuellement après actionnement d'un tiroir (251).

5. Dispositif pour mettre en oeuvre le procédé selon l'une des revendications 1 à 4, comprenant un récipient (41) dans lequel sont stockées des pièces d'aliment (5) telles que des amandes, des fruits ou des morceaux de ceux-ci, et au moins un ustensile à godet (2) qui permet de saisir, transporter et mettre des pièces d'aliment (5) dans un réceptacle (11), notamment un moule, un emballage ou une pièce d'aliment, **caractérisé en ce que** l'ustensile à godet (2), qui comprend un levier (22) monté de façon rotative et un godet (21) destiné à recevoir une pièce d'aliment (5), est monté de façon mobile de telle sorte qu'il puisse être déplacé vers l'avant, au-dessus du récipient (41), et vers l'arrière, au-dessus des réceptacles (11) à garnir, **en ce que** des moyens d'entraînement (62, 621, 65, 66, 67) sont prévus, qui permettent d'amener par pivotement l'ustensile à godet (2) d'une première à une seconde position, puis à nouveau de la seconde à la première position, de sorte que le godet (21) position, de sorte que le godet (21) peut être amené dans les pièces d'aliment (5) stockées dans le récipient (41) et revenir en arrière, et **en ce qu'**un outil de fermeture (3) est prévu, qui permet de fermer le godet (21) et de le rouvrir.

6. Dispositif selon la revendication 5, **caractérisé en ce que** le récipient (41) monté de façon élastique peut être soulevé et abaissé par un actionneur de levage (44) et/ou **en ce que** le récipient (41) monté de façon élastique peut être soumis à une vibration au moyen d'un actionneur vibrant (45).

7. Dispositif selon la revendication 5 ou 6, **caractérisé en ce que** l'élément de fermeture (32) présente un cadre (321) entourant au moins partiellement une ouverture (320) qui, durant la prise d'une pièce d'aliment (5), encadre le godet (21) et lorsqu'une pièce d'aliment (5) est prise, est amené par le bas dans la zone du godet (21), de sorte que la pièce d'aliment (5) est introduite dans le godet (21).

8. Dispositif selon la revendication 5, 6 ou 7, **caractérisé en ce qu'**est prévue une pièce intermédiaire (25), de préférence en forme d'entonnoir, servant au guidage, à l'orientation, au réchauffage et/ou au contrôle visuel des pièces d'aliment (5), qui peut éventuellement être fermée par un tiroir (251).

9. Dispositif selon l'une des revendications 5 à 9, **caractérisé en ce que** le levier (22) de l'ustensile à godet (2) est fixé à un arbre de support (76) monté de façon rotative dans un cadre de support (75), lequel arbre est accouplé de façon solidaire en rotation, au moyen d'au moins un piston (67), à un arbre d'entraînement (66) monté de façon rotative dans un cadre d'entraînement (65) et orienté parallèlement audit arbre de support, de sorte que l'outil de fermeture (3) relié à l'arbre d'entraînement (66) est toujours maintenu parallèlement à l'ustensile à godet (2), indépendamment de l'écart entre les cadres (75, 66) mobiles l'un par rapport à l'autre.

10. Dispositif selon la revendication 9, **caractérisé en ce que** le cadre d'entraînement (65) peut être déplacé parallèlement au cadre de support (75) au moyen d'un actionneur d'entraînement (62), et **en ce que** le cadre de support (75) peut être soulevé par rapport au cadre d'entraînement (65) au moyen d'au moins un actionneur de fermeture (74).

11. Dispositif selon la revendication 10, **caractérisé en ce qu'**est prévu un support de chariot (8) avec des arbres de chariot (81) au moyen desquels un chariot (7) entraîné par un actionneur de chariot (83) est monté de façon mobile, chariot auquel sont fixés l'actionneur de fermeture (74) relié au cadre de support (75) et l'actionneur d'entraînement (62) relié au cadre d'entraînement (65).

12. Dispositif selon la revendication 11, **caractérisé en ce que** le cadre d'entraînement (65) est monté de façon mobile au moyen des arbres de chariot (81).

13. Dispositif selon l'une des revendications 5 à 12, **caractérisé en ce que** sont prévus une unité de commande (9) servant à commander et à contrôler le procédé, ainsi que des éléments de commutation et des sources d'énergie pour les actionneurs électriques, hydrauliques ou pneumatiques (44, 45, 62, 74, 83).

14. Dispositif selon l'une des revendications 5 à 13, **caractérisé en ce que** le godet est adapté à la forme et à la dimension des pièces d'aliment (5).
